# EUROPÄISCHE PATENTSCHRIFT

(11) **EP 4 182 993 B1**
(45) Veröffentlichungstag und Bekanntmachung des Hinweises auf die Patenterteilung: **11.03.2026**
(21) Anmeldenummer: 21748508.5
(22) Anmeldetag: 06.07.2021
(51) Int. Cl.: H01M 10/52, B60L 50/60, B60L 58/26, H01M 10/613, H01M 10/6556, H01M 10/6561, H01M 50/317, B60L 50/64, B60L 3/00

(54) **AKKUMULATORANORDNUNG MIT EINER AKKUMULATOREINHEIT UND EINEM WÄRMEÜBERTRAGUNGSKÖRPER SOWIE WÄRMEÜBERTRAGUNGSKÖRPER**
STORAGE-BATTERY ASSEMBLY, HAVING A STORAGE-BATTERY UNIT AND A HEAT TRANSFER ELEMENT, AND HEAT TRANSFER ELEMENT
ENSEMBLE BATTERIE DE STOCKAGE, PRÉSENTANT UNE UNITÉ DE BATTERIE DE STOCKAGE ET UN ÉLÉMENT DE TRANSFERT DE CHALEUR, ET ÉLÉMENT DE TRANSFERT DE CHALEUR

(30) Priorität: 20.07.2020 DE 102020004355
(43) Veröffentlichungstag der Anmeldung: 24.05.2023
(73) Patentinhaber: Mercedes-Benz Group AG, 70372 Stuttgart (DE)
(72) Erfinder: HÄFNER, Thorsten, 72622 Nürtingen (DE); SCHROETER, Dirk, 09122 Chemnitz (DE); TALKE, Anja, 73230 Kirchheim Teck (DE)
(74) Vertreter: Novagraaf Group
(86) Internationale Anmeldenummer: PCT/EP2021/068624
(87) Internationale Veröffentlichungsnummer: WO 2022/017774

(56) Entgegenhaltungen:
- JP-A- 2010 192 209
- JP-A- 2011 258 426
- JP-A- 2019 216 045
- JP-A- H08 255 637

## Beschreibung

Die Erfindung betrifft eine Akkumulatoranordnung der im Patentanspruch 1 angegebenen Art. Darüber hinaus betrifft die Erfindung gemäß Patentanspruch 10 einen Wärmeübertragungskörper für eine solche Akkumulatoranordnung.

Moderne Kraftfahrzeuge weisen üblicherweise wenigstens eine elektrische Akkumulatoreinheit auf. Insbesondere wenn diese Kraftfahrzeuge zumindest teilweise elektrisch antreibbar bzw. fortbewegbar sind, ist diese Akkumulatoreinheit besonders leistungsfähig und bedarf besonderer Schutzeinrichtungen, um zum einen einen besonders effizienten Betrieb der Akkumulatoreinheit zu gewährleisten und zum anderen einen Nutzer der Akkumulatoreinheit, insbesondere einen Nutzer eines mit dieser Akkumulatoreinheit ausgerüsteten Kraftfahrzeugs, vor unerwünschten Wirkungen der Akkumulatoreinheit zu schützen. Um beispielsweise eine besonders vorteilhafte Betriebstemperatur für die Akkumulatoreinheit bereitzustellen, sind aus dem Stand der Technik Temperiereinrichtungen bzw. Kühleinrichtungen bekannt, mittels derer die Akkumulatoreinheit temperierbar bzw. kühlbar ist. Des Weiteren sind aus dem Stand der Technik Rohrelemente bekannt, über welche sogenannte Ventinggase, die in unerwünschter Weise - insbesondere aufgrund eines Fehlerbetriebs - von der Akkumulatoreinheit erzeugt werden, aus einer Umgebung der Akkumulatoreinheit, beispielsweise aus einem Gehäuse der Akkumulatoreinheit, abführbar bzw. wegleitbar sind.

Beispielsweise offenbart die DE 10 2008 059 969 A1 eine Vorrichtung zur Kühlung einer Batterie, umfassend eine in einem Batteriegehäuse angeordnete Wärmeleitplatte, die von einem Kühlmittel einer Klimaanlage eines Fahrzeugs durchströmbar ist, wobei mehrere elektrisch miteinander verschaltete Einzelzellen wärmeleitend mit der Wärmeleitplatte verbunden sind. Das Batteriegehäuse dieser herkömmlichen Vorrichtung weist eine Öffnung zur Abführung von Gasen auf, an welche ein Rohr angeschlossen ist, an dessen der Batterie abgewandtes Ende außerhalb eines Fahrzeuginneren angeordnet ist, wobei eine oder mehrere Kühlmittelleitungen von der Klimaanlage durch das Rohr und in die Öffnung zu der Wärmeleitplatte in das Batteriegehäuse geführt sind. Aufgrund der mindestens drei separat voneinander ausgebildeten Leitungselemente (Rohr, Kühlmittelzuleitung und Kühlmittelableitung) ist die herkömmliche Vorrichtung zur Kühlung der Batterie besonders komplex ausgebildet. Des Weiteren sind die Kühlmittelleitungen im Inneren des Rohres angeordnet, wodurch die jeweiligen positionellen Anordnungsmöglichkeiten des Rohres und/oder der Kühlmittelleitungen (zum Beispiel bei einer Herstellung des mit der Akkumulatoreinheit ausgerüsteten Kraftfahrzeugs) voneinander abhängen und infolgedessen stark beschränkt sind.

JP H 08 255 637 A beschreibt, dass jede Batteriezelle elektrisch miteinander verbunden sind, und eine Stromversorgungsleitung wird von den Anschlüssen beider Enden durch in einem Gehäuse ausgebildete Löcher herausgeführt. Am unteren Teil der Batteriezellen ist ein Halteelement angebracht, das mit Löchern zur Durchleitung des von der Batteriezelle abgegebenen Gases und der kühlen Luft versehen ist. In das Halteelement wird eine Folie mit einer dem Halteelement ähnlichen Öffnung eingesetzt, und die Folie ist über eine Feder mit einem Stopper verbunden und wird nach rechts bewegt. Diese Bewegung wird durch einen elektromagnetischen Schalter gesteuert. Wenn der Gasaustritt von einem Drucksensor erfasst wird, gibt ein Steuergerät den Antriebsstrom an ein Solenoid des elektromagnetischen Schalters ab, und die Folie wird nach rechts bewegt, um den Kühlkanal zu unterbrechen und den Gasaustritt zu ermöglichen. Das aus den Batteriezellen austretende Gas kann nach außen abgeleitet werden, ohne dass ein Kontakt mit den Batteriezellen besteht.

Aufgabe der vorliegenden Erfindung ist es, einen besonders vielseitigen Einsatz und einen besonders sicheren Betrieb einer Akkumulatoreinheit, insbesondere einem Kraftfahrzeug, zu ermöglichen.

Diese Aufgabe wird erfindungsgemäß durch eine Akkumulatoranordnung mit den im Patentanspruch 1 angegebenen Merkmalen gelöst. Des Weiteren wird diese Aufgabe durch einen Wärmeübertragungskörper mit den im Patentanspruch 10 angegebenen Merkmalen gelöst. Merkmale, Vorteile und vorteilhafte Ausgestaltungen der erfindungsgemäßen Akkumulatoranordnung sind als Merkmale, Vorteile und vorteilhafte Ausgestaltungen des erfindungsgemäßen Wärmeübertragungskörpers anzusehen und umgekehrt. Vorteilhafte Ausgestaltungen mit zweckmäßigen Weiterbildungen der Erfindung sind in den übrigen Patentansprüchen angegeben.

Erfindungsgemäß ist demnach eine Akkumulatoranordnung für ein Kraftfahrzeug vorgesehen. Die Akkumulatoranordnung weist wenigstens eine elektrische Akkumulatoreinheit auf, die insbesondere als ein Traktionsakkumulator ausgebildet ist. Denn das Kraftfahrzeug, das insbesondere als ein Kraftwagen, also als ein Personenkraftwagen und/oder als ein Lastkraftwagen, ausgebildet sein kann, ist zumindest teilweise elektrisch antreibbar bzw. fortbewegbar ausgebildet. Hierzu weist das Kraftfahrzeug bzw. der Kraftwagen eine elektrische Antriebseinheit auf, die mit der Akkumulatoreinheit bzw. mit dem Traktionsakkumulator elektrisch verbunden oder verbindbar ist. In einem motorischen Betrieb der elektrischen Antriebseinheit bzw. in einem Entladebetrieb der Akkumulatoreinheit stellt diese der elektrischen Antriebseinheit elektrische Energie bereit, die durch die elektrische Antriebseinheit zum Antreiben bzw. Fortbewegen des Kraftfahrzeugs in mechanische Arbeit umgewandelt wird. In einem Ladebetrieb der Akkumulatoreinheit bzw. in einem generatorischen Betrieb oder Rekuperationsbetrieb der elektrischen Antriebseinheit stellt diese der Akkumulatoreinheit elektrische Energie bereit, die dann in der Akkumulatoreinheit zumindest zeitweise gespeichert wird. Das bedeutet, dass es sich bei der Akkumulatoreinheit um eine elektrische Energiespeichereinrichtung handelt. Um eine besonders vorteilhafte Betriebstemperatur und infolgedessen einen besonders effizienten Ladebetrieb sowie einen besonders effizienten Entladebetrieb der elektrischen Akkumulatoreinheit bzw. des Traktionsakkumulators bereitzustellen, ist die Akkumulatoreinheit zu temperieren, beispielsweise zu kühlen. Hierzu weist die Akkumulatoranordnung einen Wärmeübertragungskörper auf. Der Wärmeübertragungskörper und die Akkumulatoreinheit sind in einem gemeinsamen Akkumulatorraum angeordnet, beispielsweise in einem gemeinsamen Gehäuse. Dabei grenzen der Wärmeübertragungskörper und die Akkumulatoreinheit direkt oder indirekt aneinander an. Grenzen die Akkumulatoreinheit und der Wärmeübertragungskörper direkt aneinander an, kann beispielsweise vorgesehen sein, dass der Wärmeübertragungskörper und die Akkumulatoreinheit direkt an miteinander korrespondierenden Flächen, beispielsweise Wärmeübertragungsflächen, aneinander angrenzen. Die Akkumulatoreinheit und der Wärmeübertragungskörper grenzen indirekt aneinander an, beispielsweise wenn zwischen den miteinander korrespondierenden Wärmeübertragungsflächen ein (separates) Wärmeleitelement und/oder ein Wärmeisolationselement angeordnet ist.

Der Wärmeübertragungskörper weist weiter eine Wandstruktur auf, in welcher ein von einem Kühlmittel durchströmbares Kanalelement ausgebildet ist. Das bedeutet, dass das Kanalelement wenigstens eine Einströmöffnung und wenigstens eine Ausströmöffnung aufweist, sodass das Kanalelement zwischen der Einströmöffnung und der Ausströmöffnung von dem Kühlmittel durchströmbar ist. Die Einströmöffnung und die Ausströmöffnung durchdringen demnach zumindest dort die Wandstruktur des Wärmeübertragungskörpers, wo das Kanalelement in eine Umgebung des Wärmeübetragungskörpers mündet. Für einen Betrieb des Wärmeübertragungskörpers bzw. der Akkumulatoranordnung bedeutet das, dass das Kühlmittel - insbesondere ein Gas, bevorzugt Luft - über die Einströmöffnung in das Kanalelement bzw. in den Wärmeübertragungskörper einströmt, das Kanalelement bzw. den Wärmeübertragungskörper durchströmt und über die Ausströmöffnung aus dem Kanalelement bzw. aus dem Wärmeübertragungskörper hinausströmt.

Um nun einen besonders vielseitigen Einsatz und einen besonders sicheren Betrieb der Akkumulatoreinheit bzw. der Akkumulatoranordnung zu ermöglichen, ist erfindungsgemäß an der Wandstruktur eine vordefinierte Verbindungseinrichtung ausgebildet, mittels derer der Akkumulatorraum und das Kanalelement fluidisch miteinander verbindbar sind. Hierzu ist die Verbindungseinrichtung aus einer Sperrstellung in eine Durchströmstellung verstellbar. In der Sperrstellung sperrt die Verbindungseinrichtung ein Strömen eines Fluids von dem Akkumulatorraum in das Kanalelement. Dahingegen gibt die Verbindungseinrichtung das Strömen des Fluids von dem Akkumulatorraum in das Kanalelement frei. Anders ausgedrückt ist das Strömen des Fluids von dem Akkumulatorraum in das Kanalelement hinein blockiert, indem die Verbindungseinrichtung in die Sperrstellung verstellt ist. Das Strömen des Fluids von dem Akkumulatorraum in das Kanalelement hinein ist hingegen ermöglicht, wenn die Verbindungseinrichtung in die Durchströmstellung verstellt ist.

Bei dem Fluid in dem Akkumulatorraum handelt es sich beispielsweise um ein Gas, insbesondere Ventinggas, das durch die Akkumulatoreinheit in unerwünschter Weise erzeugt wird und das aus dem Akkumulatorraum abzuführen ist. Das bedeutet, dass das Kanalelement und der Akkumulatorraum zum Abführen oder Ableiten des Ventinggases miteinander fluidisch verbindbar sind, indem die Verbindungseinrichtung in die Durchströmstellung verstellbar ist. Infolgedessen wird das Ventinggas aus dem Akkumulatorraum durch die Verbindungseinrichtung hindurch und schließlich über das Kanalelement abgeleitet. Das bedeutet, dass das Kanalelement bzw. der Wärmeübertragungskörper zumindest teilweise ein Leitungselement bilden, über welches das Ventinggas aus dem Akkumulatorraum abführbar ist.

Zwar ist es denkbar, dass das Kanalelement bzw. der Wärmeübertragungskörper Teil eines geschlossenen Kühlmittelkreislaufs sind, doch ist es bevorzugt, dass das Kanalelement bzw. der Wärmeübertragungskörper zumindest teilweise einen offenen Kühlmittelkreislauf bilden. Das bedeutet, dass ein offenes Ende des offenen Kühlmittelkreislaufs, insbesondere in Verlängerung des Kanalelements, in eine Umgebung der Akkumulatoranordnung, insbesondere in eine Umgebung des Kraftfahrzeugs, mündet. Ist also das Kraftfahrzeug mit der Akkumulatoranordnung ausgestattet, ist bevorzugterweise vorgesehen, dass das offene Ende des offenen Kühlmittelkreislaufs, über welchen der Wärmeübertragungskörper bzw. das Kanalelement mit Kühlmittel bzw. Luft gespeist wird, an einer Außenseite des Kraftfahrzeugs in die Umgebung des Kraftfahrzeugs mündet. Insoweit wird in einem Betrieb der Akkumulatoranordnung bzw. des Wärmeübertragungskörpers das als Luft ausgebildete Kühlmittel innerhalb des Wärmeübertragungskörpers erwärmt, um die Akkumulatoreinheit zu entwärmen bzw. zu kühlen, und dann in die Umgebung des Kraftfahrzeugs geleitet.

Indem also das Ventinggas und/oder ein anderes Fluid aus dem Akkumulatorraum über das Kanalelement und/oder über weitere den offenen Kühlmittelkreislauf bildende Leitungselemente in die Umgebung des Kraftfahrzeugs bzw. in die Umgebung der Akkumulatoranordnung ableitbar sind/ist, ist die Akkumulatoranordnung in vorteilhafter Weise besonders einfach und/oder aufwandsarm herstellbar, da auf ein separates Leitungselement zum Abführen der Ventinggase bzw. der weiteren Gase aus dem Akkumulatorraum verzichtet werden kann. Das bedeutet, dass der offene Kühlmittelkreislauf eine Doppelfunktionalität aufweist, nämlich - erstens - im Betrieb der Akkumulatoranordnung das Kühlmittel leitet und - zweitens - bei der in der Durchströmstellung angeordneter Verbindungseinrichtung die Gase oder Ventinggase aus dem Akkumulatorraum leitet. Indem also auf ein separates Ventinggasleitelement verzichtet wird, ist die Akkumulatoranordnung und infolgedessen ein damit ausgerüstetes Kraftfahrzeug besonders masseeffizient ausgebildet. Daraus folgt, dass das entsprechend ausgerüstete Kraftfahrzeug besonders kraftstoff- bzw. energieeffizient und/oder emissionsarm betreibbar bzw. fortbewegbar ist.

Indem die Gase bzw. Ventinggase aus dem Akkumulatorraum der Akkumulatoranordnung in keinerlei Zusammenhang mit irgendeinem Element bzw. irgendeiner Komponente der Akkumulatoranordnung bzw. des Kraftfahrzeugs stehen, die mit einem Innenraum bzw. einer Fahrgastzelle des Kraftfahrzeugs in Verbindung stehen, ist wirksam verhindert, dass die Gase bzw. Ventinggase aus dem Akkumulatorraum, beispielsweise über eine Kraftfahrzeugklimaanlage zur Klimatisierung der Fahrgastzelle, in den Innenraum bzw. in die Fahrgastzelle gelangen und dort in unerwünschter Weise auf wenigstens einen Insassen des Kraftfahrzeugs und/oder ein weiteres Element im Innenraum des Kraftfahrzeugs einwirken. Denn es ist vorgesehen, dass der (offene) Kühlmittelkreislauf und die Kraftfahrzeugklimaanlage voneinander separat ausgebildet sind und fluidisch getrennt voneinander betrieben werden.

In weiterer vorteilhafter Ausgestaltung der Akkumulatoranordnung ist die Verbindungseinrichtung aufgrund eines Auslöseereignisses in dem Akkumulatorraum aus der Sperrstellung in die Durchströmstellung verstellbar. Das bedeutet, dass die Verbindungseinrichtung aus der Sperrstellung in die Durchströmstellung verstellbar ist, wenn in dem Akkumulatorraum das Auslöseereignis stattfindet. Es ist denkbar, dass aufgrund des Auslöseereignisses das Fluid bzw. Gas, insbesondere Ventinggas, beispielsweise durch die Akkumulatoreinheit erzeugt wird und in den Akkumulatorraum einströmt. Demnach kann es sich bei dem Auslöseereignis beispielsweise um einen Kurzschluss einer oder mehr der Akkumulatorzellen der Akkumulatoreinheit handeln. Ferner kann es sich bei dem Auslöseereignis um eine unerwünschte Hitzeentwicklung in der Akkumulatoreinheit bzw. zwischen einzelnen Akkumulatorzellen handeln, was beispielswiese zu einer Zersetzung von elektrochemisch aktiven Massen und infolgedessen zu einem Ausgasen derselben führen kann.

Es ist vorgesehen, dass die Verbindungseinrichtung, zumindest solang das Auslöseereignis nicht vorliegt oder noch nicht vorgelegen hat, in der Sperrstellung verbleibt. Nachdem das Auslöseereignis stattgefunden hat und/oder solang das Auslöseereignis stattfindet, ist vorgesehen, dass die Verbindungseinrichtung in die Durchströmstellung verstellt wird oder bleibt. Indem das Verstellen der Verbindungseinrichtung aus der Sperrstellung in die Durchströmstellung und das Auslöseereignis miteinander (verfahrenstechnisch) gekoppelt sind, ist so besonders vorteilhaft gewährleistet, dass die Verbindungseinrichtung nicht in unerwünschter Weise in die Durchströmstellung verstellt wird.

Das Auslöseereignis kann ein mechanisches Ereignis, ein thermisches Ereignis und/oder ein chemisches Ereignis aufweisen. Bei dem mechanischen Ereignis kann es sich beispielsweise um eine Druckerhöhung in den Akkumulatorraum handeln oder um ein mechanisches Einwirken einer Gewichtskraft des aus dem Akkumulatorraum abzuführenden Fluids. Bei dem thermischen Ereignis kann es sich beispielsweise um eine Temperaturerhöhung in dem Akkumulatorraum handeln. Eine solche Temperaturänderung kann beispielsweise auf eine Aggregatszustandsänderung des aus dem Akkumulatorraum abzuführenden Fluids zurückzuführen sein. Ferner kann ein Brand in dem Akkumulatorraum, beispielsweise ein Brand des aus dem Akkumulatorraum abzuführenden Fluids, zu der Temperaturerhöhung führen, die das Auslöseereignis darstellt. Eine chemische Reaktion in dem Akkumulatorraum, beispielswiese zwischen dem aus dem Akkumulatorraum abzuführenden Fluid bzw. dem Ventinggas und einer Innenwandung des Akkumulatorraums oder andere Elemente im Inneren des Akkumulatorraums und/oder eine chemische Reaktion zwischen Fluidbestandteilen des aus dem Akkumulatorraum abzuführenden Fluids können/kann ebenfalls das Auslöseereignis darstellen. Die Verbindungseinrichtung ist insbesondere derart ausgebildet, dass diese aus der Sperrstellung in die Durchströmstellung verstellt wird, wenn sich das mechanische, thermische und/oder chemische Ereignis direkt an der Verbindungseinrichtung auswirkt.

Es hat sich weiter als vorteilhaft herausgestellt, wenn die Verbindungseinrichtung reversibel zwischen der Sperrstellung und der Durchströmstellung verstellbar ist. Das bedeutet, dass, nachdem die Verbindungseinrichtung aus der Sperrstellung in die Durchströmstellung verstellt ist, die Verbindungseinrichtung aus der Durchströmstellung in die Sperrstellung verstellbar ist. Besonders bevorzugt ist es, dass die Verbindungseinrichtung zwischen der Sperrstellung und der Durchströmstellung zerstörungsfrei reversibel verstellbar ist. Hierdurch ist gewährleistet, dass die Verbindungseinrichtung, nachdem das aus dem Akkumulatorraum abzuführende Fluid bzw. Ventinggas bestimmungsgemäß abgeführt worden ist, die Verbindungseinrichtung und infolgedessen der Wärmeübertragungskörper nicht irreversibel beschädigt ist. So ist die Verbindungseinrichtung und infolgedessen der Wärmeübertragungskörper nach dem Auslöseereignis, insbesondere nachdem das Auslöseereignis nicht mehr vorliegt, noch bestimmungsgemäß betreibbar bzw. weiter betreibbar.

Wie bereits weiter oben dargelegt und wie gemäß einer weiteren vorteilhaften Ausführungsform der Akkumulatoranordnung vorgesehen, mündet eine Ausströmöffnung des Kanalelements in die Umgebung der Akkumulatoranordnung, insbesondere in die Umgebung des Kraftfahrzeugs. Hierzu kann zwischen einer Ausströmöffnung des Kanalelements und der Umgebung der Akkumulatoranordnung bzw. des Kraftfahrzeugs ein Kühlmittelleitelement, beispielsweise ein Rohrelement, vorgesehen sein, über welches das Kanalelement und die Umgebung fluidisch miteinander verbunden oder verbindbar sind. Demnach ist sichergestellt, dass das Fluid bzw. Ventinggas nicht in die Fahrgastzelle des Kraftfahrzeugs geleitet wird.

Gemäß einer weiteren vorteilhaften Ausführungsform der Akkumulatoranordnung weist diese eine mit der Einströmöffnung des Kanalelements fluidisch verbundene Ventileinrichtung auf, mittels derer zumindest in der Durchströmstellung des Verbindungselements in Stromrichtung ein Strömen des Kühlmittels durch die Einströmöffnung hindurch in das Kanalelement hinein freigegeben ist und in Gegenstromrichtung ein Strömen des Fluids bzw. Ventinggases durch die Einströmöffnung hindurch aus dem Kanalelement hinaus gesperrt ist. Die Ventileinrichtung weist demnach wenigstens ein Ventil auf, das in Stromrichtung des Kühlmittels betrachtet vor oder an der Einströmöffnung des Kanalelements angeordnet ist. Dieses Ventil ist beispielsweise rein mechanisch betreibbar, betätigbar oder verstellbar, also beispielsweise als ein Rückschlagventil ausgebildet. Bei dem Rückschlagventil weist dann eine Sperrseite, die das Strömen in Gegenstromrichtung blockiert in Stromrichtung, wohingegen eine Durchströmseite des Rückschlagventils, die das Durchströmen in Stromrichtung freigibt, in Gegenstromrichtung.

Aufgrund der Ventileinrichtung bzw. des Rückschlagventils ist zum einen verhindert, dass das Kühlmittel bzw. die Luft in Gegenstromrichtung, das heißt über die Einströmöffnung aus dem Kanalelement hinausströmt. Zum anderen ist durch die Ventileinrichtung bzw. das Rückschlagventil verhindert, dass das Fluid aus dem Akkumulatorraum über die Verbindungseinrichtung, über das Kanalelement und über die Einströmöffnung, das heißt in Gegenstromrichtung, aus dem Kanalelement bzw. aus dem Wärmeübertragungskörper ausströmt. Sollte aufgrund des in das Kanalelement einströmenden Fluids aus dem Akkumulatorraum eine Druckerhöhung in dem Kanalelement stattfinden, wird eine Sperrwirkung der Ventileinrichtung bzw. des Rückschlagventils noch verstärkt. Hierdurch sind Elemente der Akkumulatoranordnung und/oder des Kraftfahrzeugs, die stromauf, das heißt in Gegenstromrichtung, zu der Ventileinrichtung bzw. zu dem Rückschlagventil angeordnet sind, vor dem Fluid bzw. dem Ventinggas geschützt.

Alternativ oder zusätzlich kann eine Steuereinheit vorgesehen sein, die dazu ausgebildet ist, zu erfassen, in welche der Stellungen die Verbindungseinrichtung verstellt ist und abhängig von der erfassten Stellung eine Funktion der Akkumulatoranordnung zu steuern. Das bedeutet, dass die Akkumulatoranordnung die Steuereinheit aufweist. Es kann beispielsweise vorgesehen sein, dass mittels der Steuereinheit ein Warnsignal bereitgestellt wird, etwa einem Insassen der Fahrgastzelle des Kraftfahrzeugs, wenn und/oder solang die Verbindungseinrichtung in der Durchströmstellung angeordnet ist. Hierzu kann vorgesehen sein, dass die Steuereinheit und eine an dem Insassen der Fahrgastzelle gerichtete Ausgabeeinheit kabellos und/oder kabelgebunden miteinander verbunden sind. Dies ist insofern vorteilhaft, als der Insasse der Fahrgastzelle darüber informiert werden kann, dass die Verbindungseinrichtung in die Durchströmstellung verstellt ist. Aufgrund dieser Informationen kann der Insasse, der beispielsweise der Fahrer des Kraftfahrzeugs sein kann, entsprechend reagieren, beispielsweise das Kraftfahrzeug zu einer Serviceeinrichtung verbringen.

Im Zusammenhang mit der Ventileinrichtung und der Steuereinheit ist es insbesondere vorgesehen, dass die mittels der Steuereinheit steuerbare Funktion der Akkumulatoranordnung ein Verstellen der Ventileinrichtung zwischen einer Ventildurchströmstellung, in welche die Ventileinrichtung für ein Durchströmen mit dem Kühlmittel zumindest in Stromrichtung freigegeben ist, und einer Ventilsperrstellung, in welcher die Ventileinrichtung für ein Durchströmen mit dem Fluid bzw. Ventinggas zumindest in Gegenstromrichtung gesperrt ist, umfasst. Insbesondere in der Ventilsperrstellung kann vorgesehen sein, dass die Ventileinrichtung das Durchströmen sowohl in Stromrichtung als auch in Gegenstromrichtung blockiert. Demzufolge sind die Steuereinheit und die Ventileinrichtung miteinander gekoppelt oder koppelbar, sodass die Ventileinrichtung mittels der Steuereinheit steuerbar ist. Das bedeutet, dass die Ventileinrichtung zumindest ein elektrisch oder elektromechanisch verstellbares, betreibbares oder betätigbares Ventil aufweist. Hierzu weist dieses Ventil wenigstens einen Aktor auf, mittels dessen die Ventileinrichtung bzw. das elektrische oder elektromechanische Ventil zwischen der Ventildurchströmstellung und der Ventilsperrstellung verstellbar ist.

Es ist beispielsweise vorgesehen, dass, wenn die Steuereinheit ermittelt hat, dass die Verbindungseinrichtung in der Durchströmstellung angeordnet ist oder wird, die Ventileinrichtung bzw. das elektrische oder elektromechanische Ventil in die Ventilsperrstellung verstellt wird oder ist, um zu vermeiden, dass weiteres Kühlmittel bzw. weitere Luft über die Einströmseite in das Kanalelement einströmt. Analog hierzu ist vorgesehen, dass, wenn die Steuereinheit erfasst, dass die Verbindungseinrichtung in der Sperrstellung angeordnet ist, das Einströmen von Kühlmittel bzw. Luft über die Einströmöffnung in das Kanalelement ermöglicht ist.

Durch die entsprechende Ausgestaltung der Steuereinheit bzw. durch die entsprechende Ausgestaltung der Ventileinrichtung ist so, insbesondere in der Durchströmstellung der Verbindungseinrichtung, ein Strömen von Kühlmittel, insbesondere Luft, in den Akkumulatorraum hinein blockiert. Liegt beispielsweise in dem Akkumulatorraum, insbesondere außerhalb der Akkumulatoreinheit, eine unerwünschte chemische und/oder thermische Reaktion vor, beispielsweise ein Brand, ist es vorteilhaft, eine Sauerstoffzufuhr dorthin zu unterbinden, um die chemische Reaktion bzw. den Brand nicht weiter zu beschleunigen.

Die Akkumulatoranordnung ist besonders effizient betreibbar, wenn - alternativ oder zusätzlich - vorgesehen ist, dass die mittels der Steuereinheit steuerbare Funktion ein Umschalten einer mit dem Kanalelement fluidisch verbindbaren Kühlmittelantriebseinrichtung zwischen einem aktivierten Betriebsmodus, in welchem die Kühlmittelantriebseinrichtung das Kühlmittel durch das Kanalelement hindurchtreibt, und einen deaktivierten Betriebsmodus umfasst. Anders ausgedrückt ist die Steuereinheit dazu ausgebildet, die Kühlmittelantriebseinrichtung, die beispielsweise als eine Pumpe, als ein Kompressor etc. ausgebildet sein kann, einzuschalten und/oder auszuschalten. Ist also bei der Akkumulatoranordnung vorgesehen, beispielsweise da die Verbindungseinrichtung in die Durchströmstellung verstellt ist, das Strömen des Kühlmittels bzw. das Strömen der Luft in das Kanalelement hinein zu unterbinden, wird oder ist die Kühlmittelantriebseinrichtung durch die Steuereinheit deaktiviert bzw. ausgeschaltet, das heißt in den deaktivierten Betriebsmodus umgeschaltet. Insofern wird die Kühlmittelantriebseinrichtung nicht unnötigerweise betrieben, zumindest so lang nicht, solang ein Bedarf an weiterem Kühlmittel bzw. an weiterer Luft und/oder eines Antreibens des Kühlmittels nicht vorliegt.

Gleichermaßen ist mittels der Steuereinheit die Kühlmittelantriebseinrichtung aus dem deaktivierten Betriebsmodus in den aktivierten Betriebsmodus umschaltbar, das heißt einschaltbar. Wird mittels der Steuereinheit erfasst, dass die Verbindungseinrichtung in die Sperrstellung verstellt ist oder wurde, besteht (wieder) der Bedarf an weiterem Kühlmittel bzw. an weiterer Luft und/oder an einem Antrieb des Kühlmittels durch das Kanalelement bzw. durch den Wärmeübertragungskörper hindurch. Denn ist die Verbindungseinrichtung in der Sperrstellung angeordnet, ist vorgesehen, dass die Akkumulatoreinheit über den Wärmeübertragungskörper bzw. über die durch den Wärmeübertragungskörper hindurchströmende Luft gekühlt wird. Das bedeutet, dass die Kühlmittelantriebseinrichtung abhängig von der jeweiligen Stellung, in welche die Verbindungseinrichtung verstellt ist, besonders effizient betreibbar ist.

Die Erfindung betrifft des Weiteren einen Wärmeübertragungskörper für eine Akkumulatoranordnung. Der Wärmeübertragungskörper weist eine Wandstruktur auf, in welcher ein von einem Kühlmittel durchströmbares Kanalelement ausgebildet ist. Der Wärmeübertragungskörper ist des Weiteren dazu ausgebildet, zusammen mit einer Akkumulatoreinheit eine Akkumulatoranordnung zu bilden. Das bedeutet, dass es sich bei dem Wärmeübertragungskörper insbesondere um den Wärmeübertragungskörper handelt, der zuvor beschrieben wurde.

Um mittels des Wärmeübertragungskörpers einen besonders vielseitigen Einsatz und einen besonders sicheren Betrieb der Akkumulatoreinheit zu ermöglichen, ist erfindungsgemäß vorgesehen, dass an der Wandstruktur des Wärmeübertragungskörpers eine Verbindungseinrichtung ausgebildet ist. Mittels der Verbindungseinrichtung sind eine Umgebung des Wärmeübertragungskörpers und das Kanalelement fluidisch miteinander verbindbar. Hierzu ist die Verbindungseinrichtung aus einer Sperrstellung in eine Durchströmstellung verstellbar. In der Sperrstellung sperrt die Verbindungseinrichtung ein Strömen eines Fluids von einer Umgebung in das Kanalelement, wohingegen in der Durchströmstellung die Verbindungseinrichtung das Strömen des Fluids von der Umgebung in das Kanalelement freigibt.

Zu dem erfindungsgemäßen Wärmeübertragungskörper gehören auch Ausgestaltungen, die bereits im Zusammenhang mit der erfindungsgemäßen Akkumulatoranordnung beschrieben worden sind. Aus diesem Grund sind diese Ausführungsformen sowie dazugehörige Vorteile hier nicht noch einmal dargelegt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt
- Fig. 1: eine schematische und geschnittene Ansicht einer Akkumulatoranordnung mit einer Verbindungseinrichtung;
- Fig. 2: eine schematische und geschnittene Teilansicht der Akkumulatoranordnung mit der Verbindungseinrichtung, die ein Bruchelement aufweist;
- Fig. 3: eine schematische und geschnittene Teilansicht der Akkumulatoranordnung mit der Verbindungseinrichtung, die ein Schmelzelement aufweist; und
- Fig. 4: eine schematische und geschnittene Teilansicht der Akkumulatoranordnung mit der Verbindungseinrichtung, die ein Schließelement aufweist.

In den Figuren sind gleiche oder funktionsgleiche Elemente mit gleichen Bezugszeichen versehen.

Im Folgenden werden eine Akkumulatoranordnung 1 und ein Wärmeübertragungskörper 2 gemeinsam beschrieben.

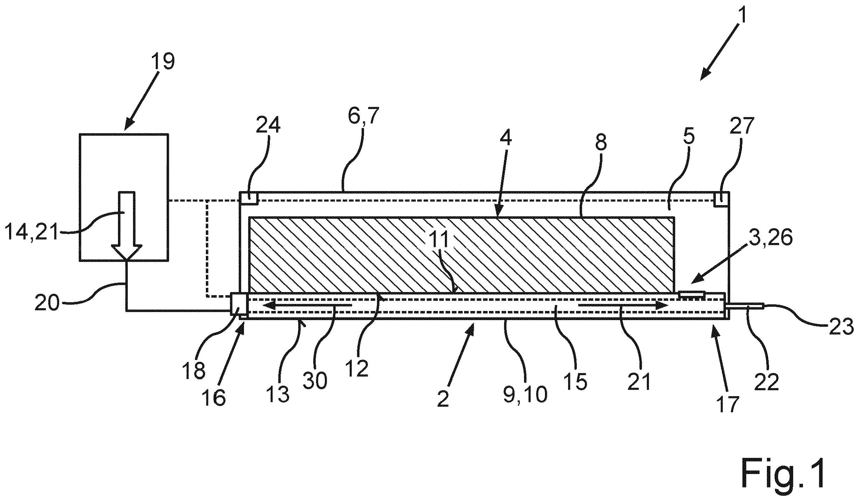

Fig. 1 zeigt in schematischer und geschnittener Ansicht die Akkumulatoranordnung 1, die eine Verbindungseinrichtung 3 aufweist, die weiter unten noch genauer beschrieben wird. Die Akkumulatoranordnung 1 ist für ein Kraftfahrzeug (nicht dargestellt) vorgesehen, bei dem es sich insbesondere um einen Kraftwagen - das heißt Personenkraftwagen und/oder Lastkraftwagen - um ein Kraftrad, um eine selbstfahrende Arbeitsmaschine, um einen Kraftomnibus etc. handeln kann. Das Kraftfahrzeug ist zumindest teilweise elektrisch betreibbar bzw. fortbewegbar, das bedeutet, es handelt sich bei dem Kraftfahrzeug beispielsweise um ein Elektrofahrzeug, um ein Hybrid-Fahrzeug, um ein Brennstoffzellen-Fahrzeug etc. Dementsprechend weist das Kraftfahrzeug eine elektrische Energiespeichereinrichtung sowie eine elektrische Antriebseinrichtung auf. Im vorliegenden Beispiel ist die elektrische Energiespeichereinrichtung des elektrisch antreibbaren bzw. betreibbaren Kraftfahrzeugs durch eine Akkumulatoreinheit 4 gebildet, die auch als Hochvoltspeicher oder Traktionsakkumulator ("Traktionsbatterie") bezeichnet werden kann. Die Akkumulatoreinheit 4 bzw. der Traktionsakkumulator ist Teil der Akkumulatoranordnung 1, das bedeutet, dass die Akkumulatoranordnung 1 den Traktionsakkumulator bzw. die Akkumulatoreinheit 4 umfasst.

Um die Akkumulatoreinheit 4 zu temperieren, das heißt zu erwärmen und/oder zu kühlen, grenzen der Wärmeübertragungskörper 2 und die Akkumulatoreinheit 4 aneinander an und sind jeweils entsprechend ausgebildet, um einen besonders effizienten Wärmeübergang bzw. eine besonders effiziente Wärmeübertragung zwischeinander zu gewährleisten. Es kann beispielsweise vorgesehen sein, dass die Akkumulatoreinheit 4 und der Wärmeübertragungskörper 2 miteinander stoffschlüssig verbunden sind. Um den Stoffschluss zwischen der Akkumulatoreinheit 4 und dem Wärmeübertragungskörper 2 zu vermitteln, kann zwischen der Akkumulatoreinheit 4 und dem Wärmeübertragungskörper 2 beispielsweise eine Wärmeleitpaste, ein Klebstoff, ein zunächst flüssiges oder pastöses und dann aushärtendes metallisches Material etc. zum Einsatz kommen.

Der Wärmeübertragungskörper 2 und die Akkumulatoreinheit 4 sind in einem gemeinsamen Akkumulatorraum 5 angeordnet, der zumindest bereichsweise von einem Gehäuse 6 der Akkumulatoranordnung umschlossen ist. Sowohl die Akkumulatoreinheit 4 als auch der Wärmeübertragungskörper 2 sind innerhalb des Akkumulatorraums 5 bzw. innerhalb des Gehäuses 6 der Akkumulatoranordnung 1 angeordnet. Denn der Akkumulatorraum 5 ist durch einen Innenraum des Gehäuses 6 bzw. einen durch das Gehäuse 6 definierten und/oder umschlossenen Innenraum gebildet. Es kann vorgesehen sein, dass wenigstens eine Außenwand 7 des Gehäuses 6 durch eine Außenwand oder wenigstens einen Außenwandanteil 8 der Akkumulatoreinheit 4 und/oder durch wenigstens eine Außenwand oder wenigstens einen Außenwandanteil 9 einer Wandstruktur 10 des Wärmeübertragungskörpers 2 gebildet ist.

Die Wandstruktur 10 des Wärmeübertragungskörpers 2 weist eine Oberseite 11 auf, die im vorliegenden Beispiel an eine Unterseite 12 der Akkumulatoreinheit 4 angrenzt. Des Weiteren weist der Wärmeübertragungskörper 2 bzw. dessen Wandstruktur 10 eine Unterseite 13 auf, die der Oberseite 11 entgegengesetzt ist, sodass die Wandstruktur 10 durch zwei voneinander beabstandete Außenwandanteile 9 gebildet ist, wobei einer der Außenwandanteile 9 die Oberseite 11 und der entsprechende andere der Außenwandanteile 9 die Unterseite 13 aufweist bzw. bereitstellt. Durch die Wandstruktur 10 erstreckt sich ein von einem Kühlmittel 14 durchströmbares Kanalelement 15, dessen Einströmöffnung 16 eine Einströmöffnung des Wärmeübertragungskörpers 2 bildet und dessen Ausströmöffnung 17 eine Ausströmöffnung des Wärmeübertragungskörpers 2 bildet. Mit anderen Worten fallen die Einströmöffnung 16 des Kanalelements 15 und die Einströmöffnung des Wärmeübertragungskörpers 2 zusammen, wobei die Ausströmöffnung 17 des Kanalelements 15 und die Ausströmöffnung des Wärmeübertragungskörpers 2 zusammenfallen.

Die Akkumulatoranordnung 1 weist weiter eine Ventileinrichtung 18 auf, über welche eine Kühlmittelantriebseinrichtung 19, beispielsweise eine Pumpe, ein Kompressor etc., und die Einströmöffnung 16 fluidisch miteinander verbunden sind. Wird also im Betrieb des Wärmeübertragungskörpers 2 bzw. im Betrieb der Akkumulatoranordnung 1 mittels der Kühlmittelantriebseinrichtung 19 das Kühlmittel 14, bei dem es sich insbesondere um ein Gas, vorliegend Luft, handelt, verdichtet bzw. angetrieben, durchströmt die Luft bzw. das Kühlmittel 14 ein Leitungselement 20, beispielsweise ein Rohr, einen Schlauch etc., über welches eine Ausströmseite bzw. Druckseite der Kühlmittelantriebseinrichtung 19 und die Ventileinrichtung 18 fluidisch miteinander verbunden sind. Die Ventileinrichtung 18 ist des Weiteren mit der Einströmöffnung 16 des Kanalelements 15 verbunden, was bedeutet, dass die Ventileinrichtung 18 zwischen der Einströmöffnung 16 des Kanalelements 15 und der Ausströmseite bzw. Druckseite der Kühlmittelantriebseinrichtung 19 angeordnet ist.

Durchströmt also das Kühlmittel 14 bzw. die Luft in Stromrichtung 21 - angetrieben mittels der Kühlmittelantriebseinrichtung 19 - das Leitungselement 20 durchströmt es daraufhin die Ventileinrichtung 18, daraufhin die Einströmöffnung 16, daraufhin das Kanalelement 15, um schließlich über die Ausströmöffnung 17 aus dem Kanalelement 15 bzw. aus dem Wärmeübertragungskörper 2 auszuströmen. Es ist vorgesehen, dass das Kühlmittel 14 bzw. die Luft unter dem Ausströmen aus dem Wärmeübertragungskörper 2 bzw. aus dessen Kanalelement 15 in ein (zweites) Leitungselement 22 einströmt, dessen erstes Ende fluidisch mit dem Kanalelement 15 bzw. mit der Ausströmöffnung 17 verbunden ist. Ein zweites Ende 23 des zweiten Leitungselements 22 mündet in eine Umgebung der Akkumulatoranordnung 1, sodass das Kühlmittel 14 - also die Luft - aufgrund des Betriebs der Akkumulatoranordnung 1 bzw. des Wärmeübertragungskörpers 2 in diese Umgebung ausströmt. Ist das Kraftfahrzeug mit der Akkumulatoranordnung 1 ausgerüstet, ist vorgesehen, dass das zweite Ende 23 des zweiten Leitungselements 22 in eine Umgebung des Kraftfahrzeugs mündet. Anders ausgedrückt ist das Kanalelement 15 über das mit dessen Ausströmöffnung 17 verbundene Leitungselement 22 fluidisch derart verlängert, dass die Ausströmöffnung 17 über das Leitungselement 22 in die Umgebung der Akkumulatoranordnung 1 bzw. in die Umgebung des Kraftfahrzeugs mündet.

Es ist des Weiteren für die Akkumulatoranordnung 1 vorgesehen, dass keines der kühlmittelführenden Elemente mit einem Innenraum des Kraftfahrzeugs, beispielsweise einem Fahrerhaus, einer Fahrgastzelle etc., fluidisch verbunden ist. Stattdessen ist vorgesehen, dass alle Elemente der Akkumulatoranordnung 1, die das Kühlmittel 14 bzw. die Luft führen, und der Innenraum des Kraftfahrzeugs fluidisch voneinander getrennt bzw. isoliert sind.

Es ist weiter bei der Akkumulatoranordnung 1 eine Steuereinheit 24 vorgesehen, die dazu ausgebildet ist, wenigstens eine Funktion der Akkumulatoranordnung 1 zu steuern.

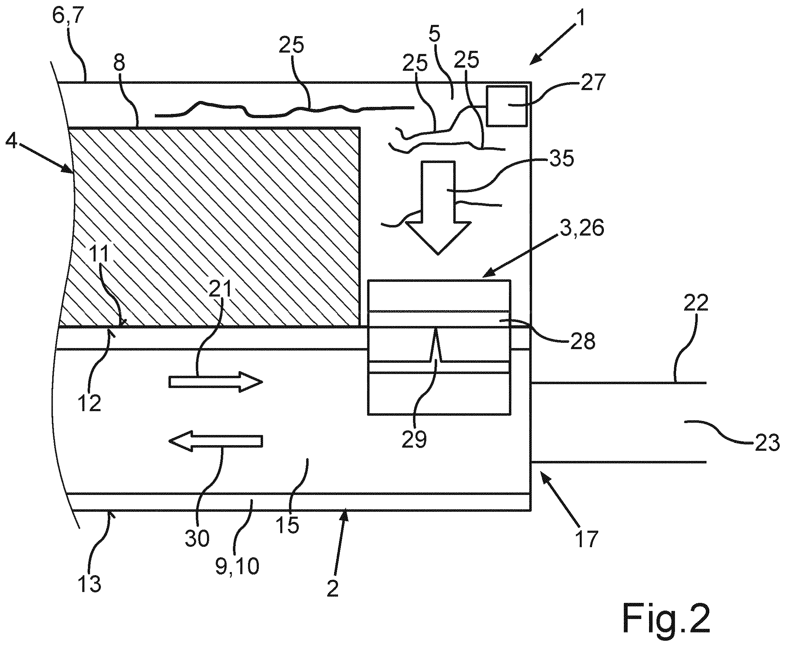

Beispielsweise als Nebenprodukt oder Produkt eines Fehlerbetriebs der Akkumulatoreinheit 4 kann es dazu kommen, dass sich in dem Akkumulatorraum 5 wenigstens ein von dem Kühlmittel 14 bzw. von der Luft unterschiedliches Fluid, insbesondere Gas, sammelt. Dieses wenigstens eine von dem Kühlmittel 14 unterschiedliche Fluid bzw. Gas wird im Folgenden als Ventinggas 25 (siehe Fig. 2, Fig. 3, Fig. 4) bezeichnet. Um zu vermeiden, dass durch das Ansammeln des Ventinggases 25 und/oder durch das Ventinggas 25 an sich in dem Akkumulatorraum 5 Schaden an der Akkumulatoranordnung 1 angerichtet wird, ist dieses Ventinggas 25, insoweit es entstanden ist bzw. entsteht - aus dem Akkumulatorraum 5 abzuführen bzw. abzuleiten. Vorteilhafterweise geschieht dies auf kontrollierte Weise, um zu vermeiden, dass beispielsweise das Gehäuse 6 der Akkumulatoranordnung 1 birst und das Ventinggas 25 in unkontrollierter Weise, beispielsweise explosiv, aus dem Akkumulatorraum 5 entweicht.

Um also das Ventinggas 25 besonders effizient und sicher aus dem Akkumulatorraum 5 abführen zu können, weist die Akkumulatoranordnung 1 im vorliegenden Beispiel die Verbindungseinrichtung 3 auf, die an der Wandstruktur 10 des Wärmeübertragungskörpers 2 ausgebildet ist. Insbesondere ist die Verbindungseinrichtung 3 an einer vordefinierten Stelle 26 der Wandstruktur 10 des Wärmeübertragungskörpers 2 ausgebildet. Mittels der Verbindungseinrichtung 3 sind der Akkumulatorraum 5 und das Kanalelement 15 fluidisch miteinander verbindbar. Hierzu ist die Verbindungseinrichtung 3 aus einer Sperrstellung, in welcher die Verbindungseinrichtung 3 ein Strömen des Ventinggases 25 von dem Akkumulatorraum 5 in das Kanalelement 15 hinein sperrt, in eine Durchströmstellung verstellbar, in welcher die Verbindungseinrichtung 3 das Strömen des Ventinggases 25 von dem Akkumulatorraum 5 in das Kanalelement 15 hinein freigibt. In Fig. 1 ist die Verbindungseinrichtung 3 in der Sperrstellung dargestellt.

Ist die Verbindungseinrichtung 3 in der Sperrstellung angeordnet bzw. in die Sperrstellung verstellt, ist vorgesehen, dass im Betrieb der Akkumulatoranordnung 1 bzw. im Betrieb des Wärmeübertragungskörpers 2 das Kühlmittel 14 nicht in den Akkumulatorraum 5 einströmen kann, da das Kanalelement 15 und der Akkumulatorraum 5 fluidisch voneinander getrennt bzw. abgedichtet sind. Kommt es jedoch zu einem Auslöseereignis, beispielsweise durch das Ansammeln des Vendinggases 25 in dem Akkumulatorraum 5, wird die Verbindungseinrichtung 3 von der Sperrstellung in die Durchströmstellung verstellt. Bei diesem Auslöseereignis kann es sich beispielsweise um das Ansammeln des Ventinggases 25 in dem Akkumulatorraum 5 handeln. Es sind weitere Auslöseereignisse denkbar oder dass das Auslöseereignis weitere Teilereignisse aufweist. Bei dem jeweiligen Teilereignis und/oder bei dem Auslöseereignis kann es sich um ein mechanisches Ereignis, ein thermisches Ereignis und/oder um ein chemisches Ereignis handeln. Jedenfalls hängt das Auslöseereignis bzw. hängen die Teilereignisse mit dem Erzeugen und/oder Ansammeln des Vendinggases 25 in dem Akkumulatorraum 5 zusammen. So kann es sich bei dem mechanischen Ereignis beispielsweise um eine Druckerhöhung in dem Akkumulatorraum 5 handeln, die aufgrund des Einströmens des Ventinggases 25 in den Akkumulatorraum 5 hinein erfolgt. Weiter kann es sich um ein thermisches Ereignis, insbesondere in dem Akkumulatorraum 5, handeln, beispielsweise indem das Ventinggas 25 eine vergleichsweise hohe Temperatur aufweist, sodass es zu einem (markanten) Temperaturanstieg in dem Akkumulatorraum 5 kommt. Ferner kann das Ventinggas 25 chemische Elemente und/oder Moleküle aufweisen, die miteinander und/oder mit weiteren in dem Akkumulatorraum 5 angeordneten Komponenten der Akkumulatoranordnung 1, beispielsweise der Außenwand / dem Außenwandanteil 8 der Akkumulatoreinheit 4, einer Innenwand des Gehäuses 6 etc., reagieren. Ein besonders prominentes Beispiel für ein chemisches und/oder thermisches Ereignis ist ein Brand.

Um das Auslöseereignis und/oder das Ventinggas 25 in dem Akkumulatorraum 5 zu detektieren, zu sensieren oder zu erfassen weist die Akkumulatoranordnung 1 eine Sensorik 27 auf, die wenigstens einen Sensor in dem Akkumulatorraum 5, das heißt innerhalb des Gehäuses 6, aufweist. Bei diesem Sensor handelt es sich insbesondere um einen Drucksensor, einen Temperatursensor und/oder um einen Chemosensor bzw. Gassensor. Hierbei ist die Sensorik 27 bzw. der Sensor mit der Steuereinheit 24 koppelbar oder gekoppelt, um entsprechende Sensorergebnisse der Steuereinheit 24 bereitzustellen. Das bedeutet, dass die Steuereinheit aufgrund der Sensorik 27 des Weiteren dazu ausgebildet ist, das Ventinggas 25 bzw. das Auslöseereignis in dem Akkumulatorraum 5 zu erfassen.

Liegt also im Betrieb der Akkumulatoranordnung 1 das Auslöseereignis und/oder das Ventinggas 25 in dem Akkumulatorraum 5 vor, wird die Verbindungseinrichtung 3 in die Durchströmstellung verstellt, sodass dann der Akkumulatorraum 5 und das Kanalelement 15 fluidisch miteinander verbunden sind. Hierdurch kann die vordefinierte Stelle 26 als eine Sollbruchstelle ausgebildet sein, wobei dann die Verbindungseinrichtung 3 ein Bruchelement 28 aufweist. Ein solches Bruchelement 28 ist in Fig. 2 dargestellt, die eine schematische und geschnittene Teilansicht der Akkumulatoranordnung 1 mit der Verbindungseinrichtung 3 zeigt. Die vordefinierte Stelle 26 bzw. die Sollbruchstelle, das heißt die Verbindungseinrichtung 3 bzw. dessen Bruchelement 28, ist derart ausgebildet, dass in einem Betrieb der Akkumulatoranordnung 1 der in dem Kanalelement 15 vorherrschende Druck des Kühlmittels 14 bzw. der Luft das Bruchelement 28 nicht zum Brechen, Reißen etc. bringt. Des Weiteren ist das Bruchelement 28 derart ausgebildet, dass dieses, wenn in dem Akkumulatorraum 5 das Ventinggas 25, insbesondere in ausreichender Menge und/oder unter ausreichendem Druck, vorhanden ist, das Bruchelement 28 bzw. die Sollbruchstelle bricht oder reißt, sodass dann aufgrund der gebrochenen bzw. gerissenen Sollbruchstelle bzw. aufgrund des gebrochenen bzw. gerissenen Bruchelements 28 der Akkumulatorraum 5 und das Kanalelement 15 fluidisch miteinander verbunden sind. Bei der vordefinierten Stelle 26 bzw. bei der Sollbruchstelle und/oder bei dem Bruchelement 28 handelt es sich insbesondere um wenigstens einen Teilbereich des entsprechenden Außenwandanteils 9 des Wärmeübertragungskörpers 2. Das bedeutet, dass der Außenwandanteil 9, der die Oberseite 11 des Wärmeübertragungskörpers 2 bereitstellt, in der Sperrstellung der Verbindungseinrichtung 3, das heißt bei intakter Sollbruchstelle, zumindest an der vordefinierten Stelle 26 den Akkumulatorraum 5 und das Kanalelement 15 fluidisch voneinander abdichtet. Die Verbindungseinrichtung 3 ist in die Durchströmstellung verstellt, insoweit das Bruchelement 28 gerissen und gebrochen ist.

Alternativ zu der Ausgestaltung, dass das Bruchelement 28 ein integraler Bestandteil des Außenwandanteils 9 ist, kann vorgesehen sein, dass das Bruchelement 28 aus einem anderen Material als der entsprechende Außenwandanteil 9 gebildet ist. Beispielsweise kann das Material des Bruchelements 28 ein von dem Außenwandanteil 9 unterschiedliches Metall, ein Gewebe, einen Kunststoff etc. aufweisen.

Um ein Brechen oder Reißen des Bruchelements 28 an der vordefinierten Stelle 26 bzw. an der Sollbruchstelle zu unterstützen, weist die Akkumulatoranordnung 1, insbesondere die Verbindungseinrichtung 3, ein Dornelement 29 auf, dessen Spitze ortsfest gegen das Bruchelement 28 gerichtet ist, wobei das Dornelement 29 auf Seiten des Kanalelements 15 angeordnet ist. Es ist so beispielsweise ein Grenzdruck für den Akkumulatorraum 5 vorgebbar, ab welchem bzw. bei welchem das Bruchelement 28 bestimmungsgemäß bricht oder reißt. Hierbei ist der Grenzdruck viel höher auszulegen als der Druck, der mittels der Kühlmittelantriebseinrichtung 19 in dem Kanalelement 15 erzeugbar ist. Dieser Grenzdruck kann beispielsweise bestimmt bzw. vorgegeben werden, indem bei einer Herstellung der Akkumulatoranordnung 1 bzw. bei einer Herstellung des Wärmeübertragungskörpers 2 ein Abstand zwischen der Spitze des Dornelements 29 und dem Bruchelement bedarfsgerecht ausgebildet wird. Durch das Ventinggas 25 bzw. durch dessen induzierte Druckerhöhung in dem Akkumulatorraum 5 wird das Bruchelement 28 gegen die Spitze des Dornelements 29 gedrückt, sodass das Bruchelement 28 mittels des Dornelements 29 penetriert wird, wodurch es an der Penetrationsstelle zu einer Materialschwächung kommt, sodass schließlich das Bruchelement 28 aufgrund des Drucks bzw. aufgrund des Ventinggases 25 reißt. Hierdurch ist die vordefinierte Stelle 26 bzw. die Sollbruchstelle für das Durchströmen von dem Ventinggas 25 freigegeben. Mit anderen Worten wird das Ventinggas 25 in den Wärmeübertragungskörper 2 bzw. in das Kanalelement 15 eingeblasen.

Es ist vorgesehen, dass die Verbindungseinrichtung 3 bei einem Druck in dem Akkumulatorraum 5 öffnet, der höher ist als der Druck des Kühlmittels 14 bzw. der Luft in dem Kanalelement 15. Um zu vermeiden, dass das Ventinggas 25 entgegen der Stromrichtung 21, das heißt in Gegenstromrichtung 30 durch das Kanalelement 15 hindurchströmt, insbesondere zu der Kühlmittelantriebseinrichtung 19 hin, ist vorgesehen, das Strömen des Ventinggases 25 in Gegenstromrichtung 30 mittels der Ventileinrichtung 18 zu blockieren/sperren bzw. zu verhindern. Die Ventileinrichtung 18 kann beispielsweise ein Rückschlagventil aufweisen, das - zumindest wenn oder solang die Verbindungseinrichtung 3 in die Durchströmstellung verstellt ist - das Strömen des Ventinggases 25 und/oder des Kühlmittels 14 in Gegenstromrichtung 30 sperrt. Hierzu kann das Rückschlagventil an der Einströmöffnung 16 angeordnet sein bzw. fluidisch mit dieser verbunden sein und insbesondere zwischen der Kühlmittelantriebseinrichtung 19 und dem Kanalelement 15 angeordnet sein. Das Rückschlagventil wirkt des Weiteren derart, dass in der Durchströmstellung der Verbindungseinrichtung 3 weiterhin ein Strömen von Kühlmittel 14 von der Kühlmittelantriebseinrichtung 19 über das Rückschlagventil in das Kanalelement 15 hinein ermöglicht ist.

Generell ist es bei der Akkumulatoranordnung 1 möglich, dass, nachdem die Verbindungseinrichtung 3 in die Durchströmstellung verstellt worden ist, die Ventinggase 25 und das Kühlmittel 14 miteinander ein gemeinsames Fluidgemisch bilden. Anders ausgedrückt vermischen sich die Ventinggase 25 und die Luft, insbesondere innerhalb des Kanalelements 15, da die Ventinggase 25 über die geöffnete Verbindungseinrichtung 3 in das Kanalelement 15 und in die dort befindliche Luft hineinströmen. Mit Blick auf das Rückschlagventil bedeutet dies, dass das Rückschlagventil ein Strömen des Fluidgemisches, das heißt des Kühlmittels 14 und/oder der Ventinggase 25 in Gegenstromrichtung 30 sperrt.

Alternativ oder zusätzlich zu dem Rückschlagventil, das insbesondere rein mechanisch betreibbar bzw. verstellbar ist, kann ein elektrisch bzw. elektromechanisch verstellbares bzw. schließbares oder öffenbares Ventil der Ventileinrichtung 18 dazu herangezogen werden, das Strömen der Ventinggase 25, des Kühlmittels 14 und/oder des Fluidgemischs in Gegenstromrichtung 30, das heißt aus dem Kanalelement 15 über die Einströmöffnung 16 hinaus zu unterbinden. Ein derart ausgebildetes elektrisch bzw. elektromechanisch betreibbares Ventil kann beispielsweise einen Aktor aufweisen, der mit der Steuereinheit 24 koppelbar oder gekoppelt ist. Die Steuereinheit 24 ist dann dazu ausgebildet, die Ventileinrichtung 18 bzw. das elektrisch oder elektromechanisch verstellbare Ventil zu öffnen und/oder zu schließen bzw. zwischen einer Ventildurchströmstellung und einer Ventilsperrstellung zu verstellen. Insbesondere ist vorgesehen, dass mittels der Steuereinheit 24 die Ventileinrichtung 18 bzw. das elektrisch bzw. elektromechanisch betreibbare Ventil unabhängig von einer jeweiligen Stellung der Verbindungseinrichtung 3 zwischen der Ventildurchströmstellung und der Ventilsperrstellung verstellbar ist.

Die Sollbruchstelle bzw. das Bruchelement 28 kann gemäß den weiter oben beschriebenen Auslöseereignissen zum Brechen oder Reißen gebracht werden, beispielsweise indem das Material des Bruchelements 28 aufgrund der im Akkumulatorraum 5 vorhandenen Ventinggase 25 (chemisch und/oder thermisch) zersetzt wird, beispielsweise abbrennt, schmilzt etc. Es kann beispielsweise vorgesehen sein, dass das Material der Sollbruchstelle bzw. das Material des Bruchelements 28 aufgrund der Ventinggase 25 aufgelöst bzw. erweicht wird, wodurch das Material des Bruchelements 28 schließlich reißt, sodass dann die Verbindungseinrichtung 3 in die Durchströmstellung verstellt wird.

Wie ebenfalls bereits beschrieben worden ist, ist die Steuereinheit 24 dazu ausgebildet, die Ventileinrichtung 18 zu steuern, wobei das Verstellen der Ventileinrichtung 18 zwischen der Ventildurchstörmstellung und der Ventilsperrstellung eine Funktion der Akkumulatoranordnung 1 darstellt. Hierbei ist es bevorzugt, dass die Steuereinheit 24 erfasst, in welcher der Stellung die Verbindungseinrichtung 3 verstellt ist und abhängig von dieser erfassten Stellung (das heißt abhängig ob die Verbindungseinrichtung 3 in der Durchströmstellung oder in der Sperrstellung angeordnet ist) die Funktion der Akkumulatoranordnung 1 zu steuern, beispielsweise die Ventileinrichtung 18 zwischen der Ventildurchströmstellung und der Ventilsperrstellung zu verstellen. Hierzu ist insbesondere vorgesehen, dass die Steuereinheit 24, etwa mittels der Sensorik 27, das Auslöseereignis in dem Akkumulatorraum 5 erfasst. Das Auslöseereignis kann auch Ventingereignis genannt werden. Erfasst also die Steuereinheit 24 das Auslöseereignis bzw. Ventingereignis, ist bestimmungsgemäß vorgesehen, dass die Ventileinrichtung 18 in die Ventilsperrstellung verstellt wird. In der Ventilsperrstellung ist zumindest in Gegenstromrichtung 30 das Durchströmen der Ventileinrichtung 18 gesperrt bzw. blockiert. Das ist insbesondere für den Fall vorgesehen, bei welchem eine Druckdifferenz zwischen den Drücken des Kanalelements 15 und des Akkumulatorraums 5 ungeeignet ist, die Ventileinrichtung 18 bzw. das rein mechanisch betreibbare bzw. verstellbare Rückschlagventil bei dem Ventingereignis gegen ein Strömen des Fluids bzw. Fluidgemisches in Gegenstromrichtung 30 zu sperren.

Unter erneuter Bezugnahme auf Fig. 1 ist zu erkennen, dass die Steuereinheit 24 des Weiteren mit der Kühlmittelantriebseinrichtung 19 gekoppelt oder koppelbar ist. Die Steuereinheit 24 ist ferner dazu ausgebildet, die Kühlmittelantriebseinrichtung 19 zwischen einem aktivierten Betriebsmodus und einem deaktivierten Betriebsmodus umzuschalten, wobei es sich hierbei um eine weitere Funktion der Akkumulatoranordnung 1 handelt. Bei dem aktivierten Betriebsmodus treibt die Kühlmittelantriebseinrichtung 19 das Kühlmittel 14 bzw. die Luft durch das Leitungselement 20, durch die Ventileinrichtung 18, durch das Kanalelement 15 und schließlich durch das zweite Leitungselement 22 in die Umgebung der Akkumulatoranordnung 1 bzw. des Kraftfahrzeugs. Der deaktivierte Betriebsmodus hingegen stellt beispielsweise einen ausgestalteten Zustand der Kühlmittelantriebseinrichtung 19 dar, sodass in dem deaktivierten Betriebsmodus bzw. bei ausgeschalteter Kühlmittelantriebseinrichtung 19 das Kühlmittel 14 nicht über die Kühlmittelantriebseinrichtung 19 angetrieben wird. Die Kühlmittelantriebseinrichtung 19 und das Kanalelement 15 sind in Ventilsperrstellung der Ventileinrichtung 18 fluidisch voneinander getrennt und in Ventildurchströmstellung der Ventileinrichtung 18 fluidisch miteinander verbunden. In Zusammenhang mit dem Rückschlagventil der Ventileinrichtung 18 gilt, dass die Kühlmittelantriebseinrichtung 19 und das Kanalelement 15 in Stromrichtung 21 fluidisch miteinander verbunden sind. Des Weiteren gilt hinsichtlich des Rückschlagventils der Ventileinrichtung 18, dass die Kühlmittelantriebseinrichtung 19 und das Kanalelements 15 in Gegenstromrichtung 30 fluidisch voneinander getrennt bzw. abgedichtet sind.

Um zu vermeiden, dass mittels der Kühlmittelantriebseinrichtung 19 weiteres Kühlmittel 14 bzw. weitere Luft in das Kanalelement 15 hinein angetrieben bzw. gefördert wird, ist vorgesehen, dass die Kühlmittelantriebseinrichtung 19 mittels der Steuereinheit 24 in den deaktivierten Betriebsmodus umgeschaltet wird, wenn die Verbindungseinrichtung 3 in die Durchströmstellung verstellt ist. Das bedeutet, dass die Kühlmittelantriebseinrichtung 19 der Akkumulatoranordnung 1 aufgrund des Auslöseereignisses bzw. aufgrund des Ventingereignisses deaktiviert wird, sodass eine weitere Zufuhr von Kühlmittel 14 bzw. von Luft gestoppt wird.

Im Folgenden sind weitere Ausführungsformen der Verbindungseinrichtung 3 dargestellt. Es ist zu verstehen, dass die Akkumulatoranordnung 1 mehr als eine Verbindungseinrichtung 3 aufweisen kann. Des Weiteren ist die positionelle Anordnung, wie sie in den Fig. dargestellt ist, lediglich beispielhaft zu verstehen. Denn es ist insbesondere denkbar, dass die Verbindungseinrichtung 3 unmittelbar zwischen der Akkumulatoreinheit 4 und dem Wärmeübertragungskörper 2 angeordnet ist. Dies gilt insbesondere, wenn die Verbindungseinrichtung 3 die Sollbruchstelle aufweist, die - wie bereits beschrieben - zumindest teilweise den entsprechenden Außenwandanteil 9 des Wärmeübertragungskörpers 2 bilden kann. Mit anderen Worten kann vorgesehen sein, dass die Verbindungseinrichtung 3 ganz oder teilweise von der Akkumulatoreinheit 4 bedeckt bzw. überdeckt oder verdeckt ist.

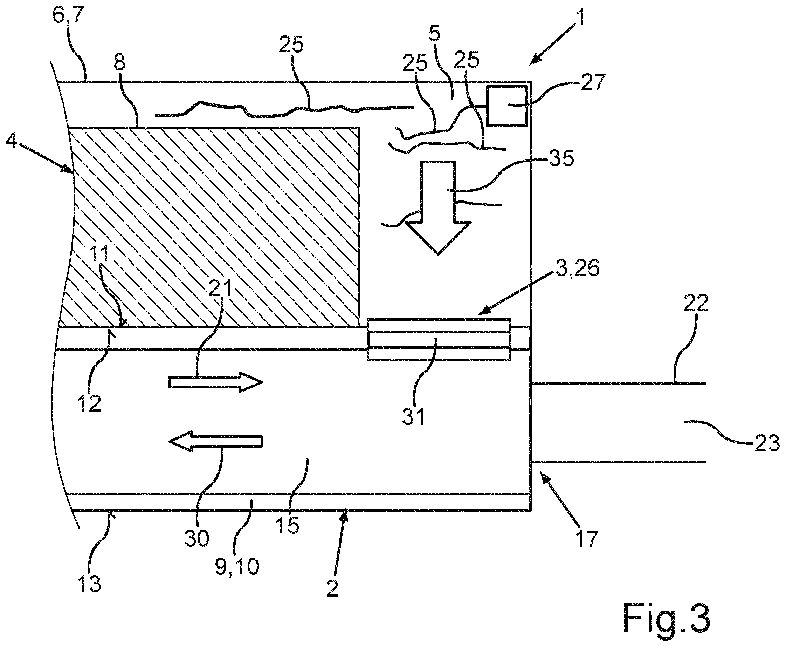

Fig. 3 zeigt in schematischer und geschnittener Teilansicht die Akkumulatoranordnung 1 mit der Verbindungseinrichtung 3, die ein Schmelzelement 31 aufweist. Das bedeutet, das an der vordefinierten Stelle 26, beispielsweise an der Sollbruchstelle, das Schmelzelement 31 ausgebildet ist. Beispielsweise kann das Schmelzelement 31 das Bruchelement 28 der Sollbruchstelle bilden. Prinzipiell funktioniert das Schmelzelement 31 analog zu dem Bruchelement 28. Sammeln sich die Ventinggase 25 in dem Akkumulatorraum 5, kommt es in dem Akkumulatorraum 5 aufgrund der Ventinggase 25 zu einer Temperaturerhöhung. Diese Temperaturerhöhung erfolgt, da die Ventinggase 25 den Akkumulatorraum 5 aufwärmen bzw. erhitzen. Demnach wirkt sich die Temperatur der Ventinggase 25 bzw. die Temperaturerhöhung an dem Schmelzelement 31 aus, wobei dieses aufgrund der thermischen Energie der Ventinggase 25 schmilzt. Aufgrund des Schmelzens bzw. nachdem das Schmelzelement 31 geschmolzen ist, ist die Verbindungseinrichtung 3 in die Durchströmstellung verstellt, wodurch das Kanalelement 15 und der Akkumulatorraum 5 dann fluidisch miteinander verbunden sind. Infolgedessen ist es den Ventinggasen 25 ermöglicht, aus dem Akkumulatorraum 5 hinaus und in das Kanalelement 15 hinein zu strömen.

Das Schmelzelement 31 ist insbesondere derart ausgestaltet, dass es nicht allein durch eine Temperatur schmilzt, die in einem bestimmungsgemäßen Betrieb der Kühlmittelantriebseinrichtung 19 in dem Kanalelement 15 erzeugt wird. Stattdessen ist zum Schmelzen des Schmelzelements 31 eine weitaus höhere Temperatur vonnöten, beispielsweise die durch die Ventinggase 25 in dem Akkumulatorraum 5 erzeugte bzw. erhöhte Temperatur.

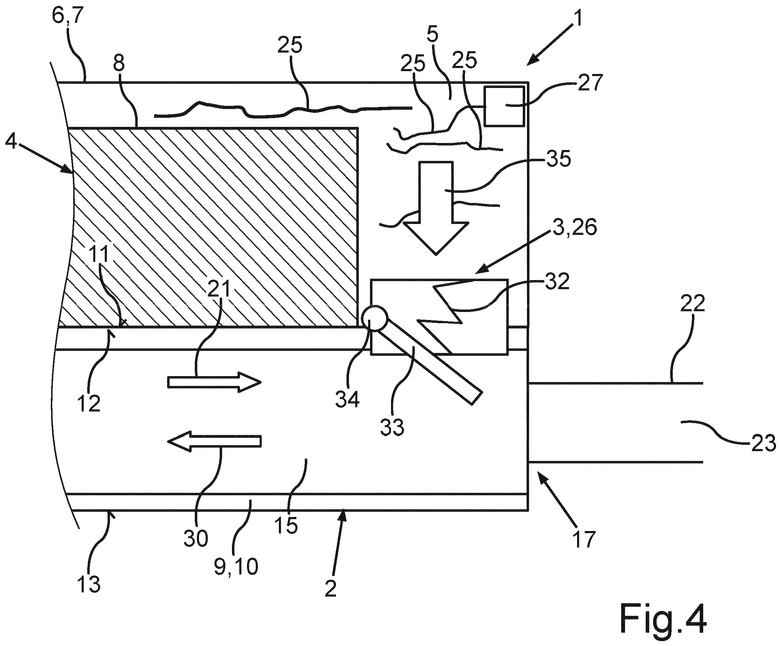

Fig. 4 zeigt in schematischer und geschnittener Teilansicht die Akkumulatoranordnung 1 mit der Verbindungseinrichtung 3, die ein Schließelement 32 aufweist. Die Verbindungseinrichtung 3 weist in dieser Ausgestaltung des Weiteren ein Schwenkelement 33 auf, das schwenkbar, etwa über ein Gelenkelement 34, an dem Außenwandanteil 9 befestigt ist, welcher die vordefinierte Stelle 26 bzw. die Verbindungseinrichtung 3 aufweist. Mittels des Schwenkelements 33 ist die Verbindungseinrichtung 3 zwischen der Sperrstellung und der Durchströmstellung verstellbar. In Fig. 4 ist die Durchströmstellung dargestellt. In der Durchströmstellung ist das Schwenkelement 33 aus der Sperrstellung ausgeschwenkt. Über das Schließelement 32, das im vorliegenden Beispiel als ein Federelement ausgebildet ist, ist das Schwenkelement 33 reversibel verschwenkbar an dem die Verbindungseinrichtung 3 aufweisenden Außenwandanteil 9 gehalten. Hierbei ist das Federelement bzw. das Schließelement 32 derart ausgebildet und angeordnet, dass das Schwenkelement 33 unter einem Spannen des Federelements aus der Sperrstellung in die Durchströmstellung verstellbar ist. Des Weiteren ist das Schließelement 32 bzw. das Federelement derart ausgebildet, dass unter einem Entspannen des Federelements das Schwenkelement 33 aus der Durchströmstellung in die Sperrstellung verstellbar ist. Liegen also im Akkumulatorraum 5 die Ventinggase 25 vor, die über die Verbindungseinrichtung 3 in das Kanalelement 15 und schließlich in die Umgebung der Akkumulatoranordnung 1 bzw. des Kraftfahrzeugs abzuführen sind, üben diese eine Öffnungskraft 35 auf die Verbindungseinrichtung 3 bzw. auf das Schwenkelement 33 auf, sodass unter einem Überwinden der Federkraft des Federelements bzw. des Schließelements 32 das Schwenkelement 33 in die Durchströmstellung verstellt wird. Die Öffnungskraft 35 resultiert beispielsweise aus einer Druckerhöhung durch die in den Akkumulatorraum 5 einströmenden bzw. sich dort ansammelnden Ventinggase 25.

Alternativ oder zusätzlich kann vorgesehen sein, dass das Gelenkelement 34 eine Antriebseinheit aufweist, die mit der Steuereinheit 24 koppelbar oder gekoppelt ist. Weiter ist dann vorgesehen, dass die Steuereinheit 24 dazu ausgebildet ist, mittels der Sensorik 27 die Ventinggase 25 und/oder das entsprechende Auslöseereignis in dem Akkumulatorraum 5 zu erfassen und basierend darauf das Gelenkelement 34 bzw. die Antriebseinheit derart anzusteuern, dass bei Vorliegen der Ventinggase 25 in dem Akkumlatorraum 5 bzw. bei Vorliegen des Auslöseereignisses das Schwenkelement 33 in die Durchströmstellung verstellt wird. Wird dann mittels der Steuereinheit 24 erfasst, dass die Ventinggase 25 bzw. das entsprechende Auslöseereignis in dem Akkumulatorraum 5 nicht oder nicht mehr vorliegt/vorliegen, ist vorgesehen, dass mittels der Steuereinheit 24 die Antriebseinheit bzw. das Gelenkelement 34 derart angesteuert wird, dass das Schwenkelement 33 aus der Durchströmstellung in die Sperrstellung verstellt wird. Gleichermaßen kann vorgesehen sein, dass das Schwenkelement 33 alternativ oder zusätzlich zu der Antriebseinheit des Gelenkelements 34 dadurch aus der Durchströmstellung in die Sperrstellung verstellt wird, dass sich der Druck in dem Akkumulatorraum 5 und der Druck des Kanalelements 15 aneinander annähern, sodass über die Federkraft des gespannten Federelements bzw. des gespannten Schließelements 32 die Öffnungskraft 35 überwunden wird, wodurch dann das Schwenkelement 33 in die Sperrstellung verstellt wird.

Diese Ausgestaltung der Verbindungseinrichtung 3 ist ein Beispiel dafür, dass die Verbindungseinrichtung 3 reversibel zwischen der Sperrstellung und der Durchströmstellung verstellbar ist. Dies ist vorteilhaft, da hierdurch die Verbindungseinrichtung 3, der Wärmeübertragungskörper 2 und infolgedessen die Akkumulatoranordnung 1 nach dem Ventingereignis bzw. nach dem jeweiligen Auslöseereignis nicht beschädigt und stattdessen weiter bestimmungsgemäß einsetzbar bzw. betreibbar sind.

Insgesamt zeigt die Erfindung, wie die Akkumulatoranordnung 1 bzw. die Akkumulatoreinheit 4 besonders vielseitig bzw. flexibel einsetzbar und betreibbar ist/sind. Denn durch das Kanalelement 15 ist zumindest bereichsweise ein Leitungssystem geschaffen, über welches die Ventinggase 25 aus dem Akkumulatorraum 5 bestimmungsgemäß abgeführt werden können. Es ist somit kein von der Akkumulatoranordnung 1 separates Rohrsystem oder Leitungssystem vorzusehen, um die Ventinggase 25 aus dem Akkumulatorraum 5 abzuleiten. Folglich weist der Wärmeübertragungskörper 2 bzw. dessen Kanalelement 15 eine Doppelfunktionalität auf. Erstens dient das Kanalelement 15 zum Leiten bzw. Führen des Kühlmittels 14 bzw. der Luft, über welche Wärme der Akkumulatoreinheit 4 besonders effizient abgeführt wird. Zweitens dient das Kanalelement 15 zur Ableitung der Ventinggase 25 aus dem Akkumulatorraum 5. Folglich ist die Akkumulatoranordnung 1 besonders masseeffizient ausgebildet, wodurch das Kraftfahrzeug, das mit der Akkumulatoranordnung 1 ausgerüstet ist, ebenfalls besonders masseeffizient ausgebildet ist. Infolgedessen ist das Kraftfahrzeug dann besonders kraftstoff- bzw. energieeffizient und/oder emissionsarm betreibbar.

Dadurch dass das Kanalelement 15 zumindest bereichsweise das Leitungssystem zur Abführung der Ventinggase 25 aus dem Akkumulatorraum 5 bildet, ist darüber hinaus der Vorteil zu erwarten, dass eine Gastemperatur der Ventinggase 25 unter dem Durchströmen der Verbindungseinrichtung 3 reduziert wird. Dies hängt beispielsweise mit einer Druckminderung bzw. Entspannung der Ventinggase 25 zusammen, die spätestens dann erfolgt, wenn die Verbindungseinrichtung 3 aus der Sperrstellung in die Durchströmstellung verstellt wurde. In diesem Zusammenhang ist zu verstehen, dass die Ventinggase 25 und das Kühlmittel 14 bzw. die Luft oder Kühlluft miteinander vermischt werden, sodass eine weitere Kühlung der Ventinggase 25 beim Abführen aus dem Akkumulatorraum 5 erfolgt.

Zwar ist im vorliegenden Beispiel vorgesehen, dass ein Innenraum der Akkumulatoreinheit 4 und der Wärmeübertragungskörper 2 gasdicht voneinander abgekapselt sind. Es kann jedoch vorgesehen sein, dass Luft bzw. Kühlmittel 14 zumindest teilweise in die Akkumulatoreinheit 4 einströmt, da das Kühlmittel 14 bzw. die Kühlluft im Inneren der Akkumulatoreinheit 4 - je nach Prinzip bzw. technischer Auslegung der Akkumulatoreinheit 4 - nicht zwangsläufig zu einem Schaden an der Akkumulatoreinheit 4 führen muss. Mit anderen Worten kann - in technisch zulässigem Rahmen - Leckageluft zulässig sein.

Der Wärmeübertragungskörper 2 bzw. dessen Kanalelement 15 bildet zumindest teilweise einen offenen Kühlmittelkreislauf. Mit anderen Worten ist das zweite Ende 23, welches fluidisch mit der Ausströmöffnung 17 des Kanalelements 15 verbunden ist, frei in der Umgebung der Akkumulatoranordnung 1 bzw. des Kraftfahrzeugs und insbesondere nicht an eine Saugseite der Kühlmittelantriebseinrichtung 19 bzw. der Pumpe oder des Kompressors fluidisch angeschlossen. Das bedeutet, dass im vorliegenden Beispiel vorgesehen ist, dass das Temperieren der Akkumulatoreinheit 4 mittels des Wärmeübertragungskörpers 2 dadurch erfolgt, dass Luft aus der Umgebung der Kühlmittelantriebseinrichtung 19 angesaugt (und gegebenenfalls erwärmt oder gekühlt wird), diese Luft zum Temperieren der Akkumulatoreinheit 4 durch das Kanalelement 15 getrieben wird, um schließlich an dem offenen Ende 23 des offenen Kühlmittelkreislaufs in die Umgebung auszutreten. Hierbei ist insbesondere vorgesehen, dass das zweite Ende 23 des zweiten Leitungselements 22 entfernt von der Kühlmittelantriebseinrichtung 19 austritt, sodass die Kühlmittelantriebseinrichtung 19 nicht direkt die aus der Akkumulatoranordnung 1 austretende Luft sofort wieder einsaugt.

Alternativ zu dem offenen Kältemittelkreislauf bzw. Kühlmittelkreislauf ist ein geschlossener Kühlmittel- bzw. Kältemittelkreislauf denkbar. Hierbei sind dann Mittel vorzusehen, die verhindern, dass die über die Verbindungseinrichtung 3 in den Wärmeübertragungskörper 2 bzw. in dessen Kanalelement 15 eintretenden bzw. eingetreten Ventinggase 25 nicht, beispielsweise mittels der Kühlmittelantriebseinrichtung 19, umgewälzt werden, denn die Ventinggase 25 können sich negativ bzw. schädigend in der Kühlmittelantriebseinrichtung 19 auswirken. Des Weiteren sind bei dem geschlossenen Kühlmittel- bzw. Kältemittelkreislauf Maßnahmen zum Druckabbau vorzusehen, um den durch die Ventinggase 25 induzierten Druck abzubauen, ohne Komponenten des geschlossenen Kühlmittelkreislaufs zu beschädigen.

## Patentansprüche

1. Akkumulatoranordnung (1) für ein Kraftfahrzeug, bei welcher eine Akkumulatoreinheit (4) und ein Wärmeübertragungskörper (2) in einem gemeinsamen Akkumulatorraum (5) angeordnet sind und aneinander angrenzen, wobei der Wärmeübertragungskörper (2) eine Wandstruktur (9, 10) aufweist, in welcher ein von einem Kühlmittel (14) durchströmbares Kanalelement (15) ausgebildet ist,
**dadurch gekennzeichnet, dass**
an der Wandstruktur (9, 10) eine vordefinierte Verbindungseinrichtung (3) ausgebildet ist, die aus einer Sperrstellung, in welcher die Verbindungseinrichtung (3) ein Strömen eines Fluids (14, 25) von dem Akkumulatorraum (5) in das Kanalelement (15) sperrt, in eine Durchströmstellung, in welcher die Verbindungseinrichtung (3) das Strömen des Fluids (14, 25) von dem Akkumulatorraum (5) in das Kanalelement (15) freigibt, verstellbar ist, wobei das Kanalelement (15) eine Einströmöffnung (16) und eine Ausströmöffnung (17) aufweist.

2. Akkumulatoranordnung (1) nach Anspruch 1,
**dadurch gekennzeichnet, dass**
die Verbindungseinrichtung (3) aufgrund eines Auslöseereignisses in dem Akkumulatorraum (5) aus der Sperrstellung in die Durchströmstellung verstellbar ist.

3. Akkumulatoranordnung (1) nach Anspruch 2,
**dadurch gekennzeichnet, dass**
das Auslöseereignis ein mechanisches Ereignis, ein thermisches Ereignis und/oder ein chemisches Ereignis aufweist.

4. Akkumulatoranordnung (1) nach einem der vorhergehenden Ansprüche,
**dadurch gekennzeichnet, dass**
die Verbindungseinrichtung (3) reversibel zwischen der Sperrstellung und der Durchströmstellung verstellbar ist.

5. Akkumulatoranordnung (1) nach einem der vorhergehenden Ansprüche,
**dadurch gekennzeichnet, dass**
eine Ausströmöffnung (17, 23) des Kanalelements (15) in eine Umgebung der Akkumulatoranordnung (1) mündet.

6. Akkumulatoranordnung (1) nach einem der vorhergehenden Ansprüche,
**gekennzeichnet durch**
eine mit einer Einströmöffnung (16) des Kanalelements (15) fluidisch verbundene Ventileinrichtung (18), mittels derer in der Durchströmstellung des Verbindungselements (3) in Stromrichtung (21) ein Strömen des Kühlmittels (14) durch die Einströmöffnung (16) hindurch in das Kanalelement (15) hinein freigegeben ist und in Gegenstromrichtung (30) ein Strömen eines Fluids (14, 25) durch die Einströmöffnung (16) hindurch aus dem Kanalelement (15) hinaus gesperrt ist.

7. Akkumulatoranordnung (1) nach einem der vorhergehenden Ansprüche,
**gekennzeichnet durch**
eine Steuereinheit (24), die dazu ausgebildet ist, zu erfassen, in welche der Stellungen die Verbindungseinrichtung (3) verstellt ist und abhängig von der erfassten Stellung eine Funktion der Akkumulatoranordnung (1) zu steuern.

8. Akkumulatoranordnung (1) nach Anspruch 6 und 7,
**dadurch gekennzeichnet, dass**
die mittels der Steuereinheit (24) steuerbare Funktion ein Verstellen der Ventileinrichtung (18) zwischen einer Ventildurchströmstellung, in welcher die Ventileinrichtung (18) für ein Durchströmen mit dem Kühlmittel (14) zumindest in Stromrichtung (21) freigegeben ist, und einer Ventilsperrstellung, in welcher die Ventileinrichtung (18) für ein Durchströmen mit dem Fluid (14, 25) zumindest in Gegenstromrichtung (30) gesperrt ist, umfasst.

9. Akkumulatoranordnung (1) nach Anspruch 7 oder 8,
**dadurch gekennzeichnet, dass**
die mittels der Steuereinheit (24) steuerbare Funktion ein Umschalten einer mit dem Kanalelement (15) fluidisch verbindbaren Kühlmittelantriebseinrichtung (19) zwischen einem aktivierten Betriebsmodus, in welchem die Kühlmittelantriebseinrichtung (19) das Kühlmittel (14) durch das Kanalelement (15) hindurchtreibt, und einem deaktivierten Betriebsmodus umfasst.

10. Wärmeübertragungskörper (2) für eine Akkumulatoranordnung (1), mit einer Wandstruktur (9, 10), in welcher ein von einem Kühlmittel (14) durchströmbares Kanalelement (15) ausgebildet ist,
**dadurch gekennzeichnet, dass**
an der Wandstruktur (10) eine Verbindungseinrichtung (3) ausgebildet ist, die aus einer Sperrstellung, in welcher die Verbindungseinrichtung (3) ein Strömen eines Fluids (14, 25) von einer Umgebung in das Kanalelement (15) sperrt, in eine Durchströmstellung, in welcher die Verbindungseinrichtung (3) das Strömen des Fluids (14, 25) von der Umgebung in das Kanalelement (15) freigibt, verstellbar ist, wobei das Kanalelement eine Einströmöffnung (16) und eine Ausströmöffnung (17) aufweist.

## Claims

1. Storage battery arrangement (1) for a motor vehicle, in which a storage battery unit (4) and a heat transfer body (2) are arranged in a common storage battery space (5) and are adjacent to each other, wherein the heat transfer body (2) has a wall structure (9, 10) in which a channel element (15) is formed through which a coolant (14) can flow,
**characterized in that**
a predefined connecting device (3) is formed on the wall structure (9, 10), which connecting device is adjustable from a block position, in which the connecting device (3) blocks a flow of a fluid (14, 25) from the storage battery space (5) into the channel element (15), to a through-flow position, in which the connecting device (3) releases the flow of the fluid (14, 25) from the storage battery space (5) into the channel element (15), wherein the channel element (15) has an inflow opening (16) and an outflow opening (17).

2. Storage battery arrangement (1) according to claim 1,
**characterized in that**
the connecting device (3) can be adjusted from the block position to the through-flow position as a result of a triggering event in the storage battery space (5).

3. Storage battery arrangement (1) according to claim 2,
**characterized in that**
the triggering event is a mechanical event, a thermal event and/or a chemical event.

4. Storage battery arrangement (1) according to any of the preceding claims, **characterized in that**
the connecting device (3) is reversibly adjustable between the block position and the through-flow position.

5. Storage battery arrangement (1) according to any of the preceding claims,
**characterized in that**
an outflow opening (17, 23) of the channel element (15) opens into an environment of the storage battery arrangement (1).

6. Storage battery arrangement (1) according to any of the preceding claims,
**characterized by**
a valve device (18) fluidically connected to an inflow opening (16) of the channel element (15), by means of which valve device, in the through-flow position of the connecting element (3), a flow of the coolant (14) through the inflow opening (16) into the channel element (15) in the flow direction (21) is released and a flow of a fluid (14, 25) through the inflow opening (16) out of the channel element (15) in the counterflow direction (30) is blocked.

7. Storage battery arrangement (1) according to any of the preceding claims,
**characterized by**
a control unit (24) which is designed to detect which of the positions the connecting device (3) is in and to control a function of the storage battery arrangement (1) depending on the detected position.

8. Storage battery arrangement (1) according to claims 6 and 7,
**characterized in that**
the function controllable by means of the control unit (24) comprises adjusting the valve device (18) between a valve through-flow position, in which the valve device (18) is released for a through-flow of the coolant (14) at least in the flow direction (21), and a valve block position, in which the valve device (18) is blocked for a through-flow of the fluid (14, 25) at least in the counterflow direction (30).

9. Storage battery arrangement (1) according to claim 7 or claim 8,
**characterized in that**
the function controllable by means of the control unit (24) comprises switching a coolant drive device (19) fluidically connectible to the channel element (15) between an activated operating mode, in which the coolant drive device (19) drives the coolant (14) through the channel element (15), and a deactivated operating mode.

10. Heat transfer body (2) for a storage battery arrangement (1), having a wall structure (9, 10) in which a channel element (15) through which a coolant (14) can flow is formed,
**characterized in that**
a connecting device (3) is formed on the wall structure (10), which connecting device is adjustable from a block position, in which the connecting device (3) blocks a flow of a fluid (14, 25) from an environment into the channel element (15), to a through-flow position, in which the connecting device (3) releases the flow of the fluid (14, 25) from the environment into the channel element (15), wherein the channel element has an inflow opening (16) and an outflow opening (17).

## Revendications

1. Agencement d'accumulateur (1) pour un véhicule automobile, dans lequel une unité d'accumulateur (4) et un corps de transfert de chaleur (2) sont disposés dans un espace d'accumulateur (5) commun et sont adjacents l'un à l'autre, dans lequel le corps de transfert de chaleur (2) présente une structure de paroi (9, 10) dans laquelle est réalisé un élément formant canal (15) pouvant être traversé par un milieu de refroidissement (14),
**caractérisé en ce que**
sur la structure de paroi (9, 10) est réalisé un dispositif de liaison (3) prédéfini qui peut être réglé d'une position de blocage, dans laquelle le dispositif de liaison (3) bloque un écoulement d'un fluide (14, 25) depuis l'espace d'accumulateur (5) dans l'élément formant canal (15), à une position de passage, dans laquelle le dispositif de liaison (3) libère l'écoulement du fluide (14, 25) depuis l'espace d'accumulateur (5) dans l'élément formant canal (15), dans lequel l'élément formant canal (15) présente une ouverture d'entrée (16) et une ouverture de sortie (17).

2. Agencement d'accumulateur (1) selon la revendication 1,
**caractérisé en ce que**
le dispositif de liaison (3) peut être déplacé de la position de blocage à la position de passage en raison d'un événement de déclenchement dans l'espace d'accumulateur (5).

3. Agencement d'accumulateur (1) selon la revendication 2,
**caractérisé en ce que**
l'événement de déclenchement présente un événement mécanique, un événement thermique et/ou un événement chimique.

4. Agencement d'accumulateur (1) selon l'une des revendications précédentes, **caractérisé en ce que**
le dispositif de liaison (3) peut être réglé de manière réversible entre la position de blocage et la position de passage.

5. Agencement d'accumulateur (1) selon l'une des revendications précédentes,
**caractérisé en ce que**
une ouverture de sortie (17, 23) de l'élément formant canal (15) débouche dans un environnement de l'agencement d'accumulateur (1).

6. Agencement d'accumulateur (1) selon l'une des revendications précédentes,
**caractérisé par**
un dispositif formant soupape (18) relié fluidiquement à une ouverture d'entrée (16) de l'élément formant canal (15), au moyen duquel dispositif formant soupape, dans la position de passage de l'élément de liaison (3), un écoulement du milieu de refroidissement (14) à travers l'ouverture d'entrée (16) dans l'élément formant canal (15) est libéré dans le sens d'écoulement (21) et un écoulement d'un fluide (14, 25) à travers l'ouverture d'entrée (16) hors de l'élément formant canal (15) est bloqué dans le sens d'écoulement contraire (30).

7. Agencement d'accumulateur (1) selon l'une des revendications précédentes,
**caractérisé par**
une unité de commande (24) qui est configurée pour détecter dans laquelle des positions le dispositif de liaison (3) est réglé et pour commander une fonction de l'agencement d'accumulateur (1) en fonction de la position détectée.

8. Agencement d'accumulateur (1) selon les revendications 6 et 7,
**caractérisé en ce que**
la fonction pouvant être commandée au moyen de l'unité de commande (24) comprend un réglage du dispositif formant soupape (18) entre une position de passage de soupape, dans laquelle le dispositif formant soupape (18) est libéré pour un passage avec le milieu de refroidissement (14) au moins dans le sens d'écoulement (21), et une position de blocage de soupape, dans laquelle le dispositif formant soupape (18) est bloqué pour un passage avec le fluide (14, 25) au moins dans le sens d'écoulement contraire (30).

9. Agencement d'accumulateur (1) selon la revendication 7 ou 8,
**caractérisé en ce que**
la fonction pouvant être commandée au moyen de l'unité de commande (24) comprend une commutation d'un dispositif d'entraînement de milieu de refroidissement (19) pouvant être relié fluidiquement à l'élément formant canal (15) entre un mode de fonctionnement activé, dans lequel le dispositif d'entraînement de milieu de refroidissement (19) entraîne le milieu de refroidissement (14) à travers l'élément formant canal (15), et un mode de fonctionnement désactivé.

10. Corps de transfert de chaleur (2) pour un agencement d'accumulateur (1), comportant une structure de paroi (9, 10) dans laquelle est réalisé un élément formant canal (15) pouvant être traversé par un milieu de refroidissement (14),
**caractérisé en ce que**
sur la structure de paroi (10) est réalisé un dispositif de liaison (3) qui peut être réglé d'une position de blocage, dans laquelle le dispositif de liaison (3) bloque un écoulement d'un fluide (14, 25) depuis un environnement dans l'élément formant canal (15), à une position de passage, dans laquelle le dispositif de liaison (3) libère l'écoulement du fluide (14, 25) depuis l'environnement dans l'élément formant canal (15), dans lequel l'élément formant canal présente une ouverture d'entrée (16) et une ouverture de sortie (17).
